# EUROPEAN PATENT APPLICATION

(11) **EP 4 852 290 A1**
(43) Date of publication of application: **09.12.2026**
(21) Application number: 25180081.9
(22) Date of filing: 02.06.2025
(51) Int. Cl.: H02M 3/335, H02M 3/337, H02M 1/38, H02M 3/156

(54) **POWER CONVERTER WITH FREQUENCY OPERATION AND DEADTIME REGULATION**

(71) Applicant: Tridonic GmbH & Co. KG, 6851 Dornbirn (AT)
(72) Inventor: Schneider, Miguel Philipp, 6851 Dornbirn (AT); Lochmann, Frank, 6851 Dornbirn (AT)
(74) Representative: Rupp, Christian

(57) **Abstract**

The present invention provides an electrical power converter. Said power converter comprises an LLC stage comprising a primary-side switching circuit including a high-side switch and a low-side switch connected in series between a supply voltage and ground, a resonant tank circuit and a transformer having a primary winding coupled to the resonant tank circuit and one or more secondary windings. The electrical power converter further comprises a downstream converter stage coupled to an output of the LLC stage and configured to regulate an output voltage for a load. Said power converter further comprises a control circuitry configured to operate the primary-side switching circuit of the LLC stage at a fixed switching frequency, and regulate a deadtime between turning off one of the high-side and low-side switches and turning on the other switch to maintain the output voltage at a target level.

## Description

### TECHNICAL FIELD

The present invention relates to power electronics, particularly to intermediate bus converters (IBCs) used in switched-mode power supplies. In particular, the invention concerns control strategies and circuit architectures for LLC converters used in very high-current, low-voltage applications, such as processor and accelerator power delivery units (PDUs) in data centers, as well as other demanding environments including LED lighting systems, industrial automation, and telecommunications infrastructure.

### BACKGROUND

Power delivery to high-performance computing systems-such as graphics processing unit (GPUs) and AI accelerators-requires converters capable of supplying extremely high current levels (often exceeding 100 A or even 1,000 A) at relatively low output voltages (typically below 2 V DC). In addition to handling such high current loads, these systems must also respond to rapid and large fluctuations in current demand, often occurring in the nanosecond to microsecond range. This presents a significant challenge for power converters in terms of both regulation and transient response.

LLC resonant converters are widely used in intermediate bus applications due to their ability to achieve high efficiency through soft-switching techniques such as zero-voltage switching (ZVS). However, conventional LLC converters typically vary switching frequency to regulate output power, which may result in slower transient response and undesired deviations from optimal operating points-especially when coupled with downstream stages like buck converters that must respond to fast load changes.

In prior designs, large output capacitance-often realized with electrolytic capacitors-has been used to buffer such rapid current surges. However, this adds significant size, cost, and may still fall short in meeting the extreme speed and magnitude of current demands seen in modern GPU applications.

Additionally, electrolytic capacitors are generally avoided in favor of ceramic or polymer capacitors with superior equivalent series resistance (ESR) performance in these use cases.

Accordingly, there is a need for improved LLC control strategies that maintain high efficiency while enabling faster dynamic response, potentially reducing the need for large passive buffers.

### SUMMARY

In view of the above-discussed challenges, the invention aims to improve the performance of LLC-based power converters by enabling precise regulation of output power through deadtime control, while maintaining a fixed switching frequency. One objective of this invention is to avoid the need for frequency modulation and preserves soft-switching conditions (e.g., ZVS), even under rapidly changing load demands. The invention is particularly suited to high-current, low-voltage applications-such as GPU power delivery in data centers-where maintaining resonant operation across a broad load range is critical for maximizing conversion efficiency.

These and other objectives are achieved by the solution of this disclosure as described in the independent claims. Advantageous implementations are further defined in the dependent claims.

According to a first aspect of the invention, an electrical power converter is provided. Said electrical power converter comprises an LLC stage comprising a primary-side switching circuit including a high-side switch and a low-side switch connected in series between a supply voltage and ground. The LLC stage further comprises a resonant tank circuit and a transformer. The resonant tank circuit is coupled to the primary-side switching circuit and the transformer. The transformer has a primary winding coupled to the resonant tank circuit and one or more secondary windings. The electrical power converter further comprises a downstream converter stage coupled to an output of the LLC stage and configured to regulate an output voltage for a load.

Said electrical power converter further comprises a control circuitry configured to operate the primary-side switching circuit of the LLC stage at a fixed switching frequency, and regulate a deadtime between turning off one of the high-side and low-side switches and turning on the other switch to maintain the output voltage at a target level.

The invention provides an electrical power converter, particularly of the LLC type. By operating the LLC stage of the converter at a fixed switching frequency and regulating the deadtime between switching transitions to maintain the output voltage at a target level, the converter can finely control the amount of energy transferred per cycle. This allows for efficient operation over a broad range of output powers, particularly at low loads, without departing from the resonant frequency. The inclusion of a downstream converter stage ensures tight voltage regulation at the point of load, enabling high-performance applications such as GPU power delivery.

According to an implementation form of the first aspect of the invention, the control circuitry is further configured to receive a feedback signal indicative of the output voltage, and regulate the deadtime based on the feedback signal.

Incorporating a feedback signal indicative of the output voltage allows the control circuit to dynamically adjust deadtime in real time to maintain voltage regulation across varying load conditions. This closed-loop approach improves responsiveness and ensures that the output voltage remains stable, even during load transients. Adjusting the deadtime based on output voltage helps reduce unnecessary switching losses and optimizes efficiency, particularly in light-load or dynamic scenarios where energy transfer must be carefully controlled to prevent voltage overshoot or undershoot.

According to an implementation form of the first aspect of the invention, the feedback signal is derived from one of the following: a current sensor coupled to the output of the LLC stage, the downstream converter stage, or the load.

Advantageously, by supporting feedback signals from various parts of the system-such as the LLC output, downstream stage, or load itself-the converter architecture becomes highly flexible and adaptable to different system designs. This enables optimized deadtime regulation across a range of configurations while supporting high-speed current dynamics typical in GPU or ASIC applications.

According to an implementation form of the first aspect of the invention, the control circuitry is further configured to increase the deadtime in response to to conditions indicative of the output voltage tending to rise above the target level.

Increasing deadtime in response to conditions where the output voltage tends to rise allows the converter to reduce energy delivery on a cycle-by-cycle basis without changing switching frequency. This maintains ZVS operation while achieving fine-grained power regulation, improving light-load efficiency and extending the operating range of the converter without frequency shifting.

According to an implementation form of the first aspect of the invention, the deadtime is constrained within a predefined range suitable for maintaining soft-switching conditions in the LLC stage.

Constraining the deadtime within a predefined range ensures that the converter remains within resonant-mode operation, thereby preserving the conditions required for soft switching. This prevents hard switching scenarios that would otherwise increase losses and device stress, ensuring high efficiency and component longevity.

According to an implementation form of the first aspect of the invention, the downstream converter stage comprises a buck converter configured to regulate the output voltage to a defined low-voltage level.

The use of a buck converter as the downstream stage enables the system to deliver precisely regulated low voltages (e.g., below 2 V) required by high-performance processors and accelerators. The buck stage can rapidly respond to load transients, while the LLC stage provides efficient isolated power delivery, combining the strengths of both topologies in a coordinated manner.

According to a further implementation form of the first aspect of the invention, the transformer is a matrix transformer comprising a plurality of secondary windings connected in parallel.

Each secondary winding may deliver a portion of the total output current. This configuration distributes the high output current across several paths, reducing the current stress on individual components. The technical effect is a substantial improvement in thermal performance and current handling capability. It also facilitates a modular and scalable design, which is highly advantageous in data center power supplies where efficient delivery of very high currents is critical.

According to a further implementation form of the first aspect of the invention, the electrical power converter further comprises one or more output capacitors having low-ESR, including ceramic or polymer capacitors, coupled to the output of the LLC stage.

Instead of large electrolytic buffers, this invention enables the use of compact, low-ESR output capacitors-such as ceramic or polymer types. This is made possible by the improved transient response achieved through deadtime regulation at fixed switching frequency. By dynamically modulating the energy transferred per cycle, the converter can respond more effectively to sharp changes in load demand, minimizing voltage droop and reducing the need for oversized output capacitance. This contributes to a more compact, efficient, and reliable power delivery system-particularly beneficial in space- and performance-critical applications like GPU and AI accelerator power supplies.

According to a second aspect of the invention, a method for operating an electrical power converter is provided. The power converter comprises an LLC stage and a downstream converter stage. The LLC stage comprises a primary-side switching circuit having a high-side switch and a low-side switch, a resonant tank circuit, and a transformer. The electrical power converter may be the electrical power converter according to the first aspect or any implementation form of the first aspect.

The method comprises operating a high-side switch and a low-side switch of the LLC stage at a fixed switching frequency, regulating an output voltage to a load using the downstream converter stage coupled to an output of the LLC stage, and regulating a deadtime between turning off one of the high-side and low-side switches and turning on the other switch to maintain the output voltage at a target level.

The method allows the converter to maintain operation at a fixed switching frequency while dynamically adjusting the power delivered per cycle through deadtime control. This supports fast response to varying load demands, improves efficiency under partial load, and reduces the need for large output buffer capacitors - particularly in high-current, low-voltage applications such as GPU power delivery.

According to an implementation form of the second aspect, the method may further comprise receiving a feedback signal indicative of the output voltage, and regulating the deadtime based on the feedback signal.

According to a further implementation form of the second aspect, the method may further comprise deriving the feedback signal from one of the following: a current sensor coupled to the output of the LLC stage, the downstream converter stage, or the load.

According to a further implementation form of the second aspect, the method may further comprise increasing the deadtime in response to conditions indicative of the output voltage tending to rise above the target level.

According to a further implementation form of the second aspect, the method may further comprise constraining the deadtime within a predefined range suitable for maintaining soft-switching conditions in the LLC stage.

Implementation forms of the method of the second aspect may correspond to the implementation forms of the electrical power converter of the first aspect described above. The method of the second aspect and its implementation forms achieve the same advantages and effects as described above for the electrical power converter of the first aspect and its implementation forms.

According to a third aspect of the invention, a power delivery system is provided. The power delivery system comprises a load device configured to operate at a low DC voltage and high current; and an electrical power converter according to the first aspect or any implementation forms of the first aspect of the invention, wherein the electrical power converter is configured to supply power to the load device.

Optionally, the load device comprises a GPU, a lighting module, or an array of LEDs.

Implementation forms of the system of the third aspect may correspond to the implementation forms of the electrical power converter of the first aspect described above. The system of the third aspect and its implementation forms achieve the same advantages and effects as described above for the electrical power converter of the first aspect and its implementation forms.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Fig. 1: shows an exemplary electrical power converter according to an embodiment of this invention.
- Fig. 2: shows a timing diagram related to the operation of the electrical power converter according to an embodiment of this invention.
- Fig. 3: shows a timing diagram related to the operation of the electrical power converter according to an embodiment of this invention.
- Fig. 4: shows a method according to an embodiment of this invention.

### DETAILED DESCRIPTION OF EMBODIMENTS

Illustrative embodiments of an electrical power converter, a power delivery system, and a method for operating the electrical power converter are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

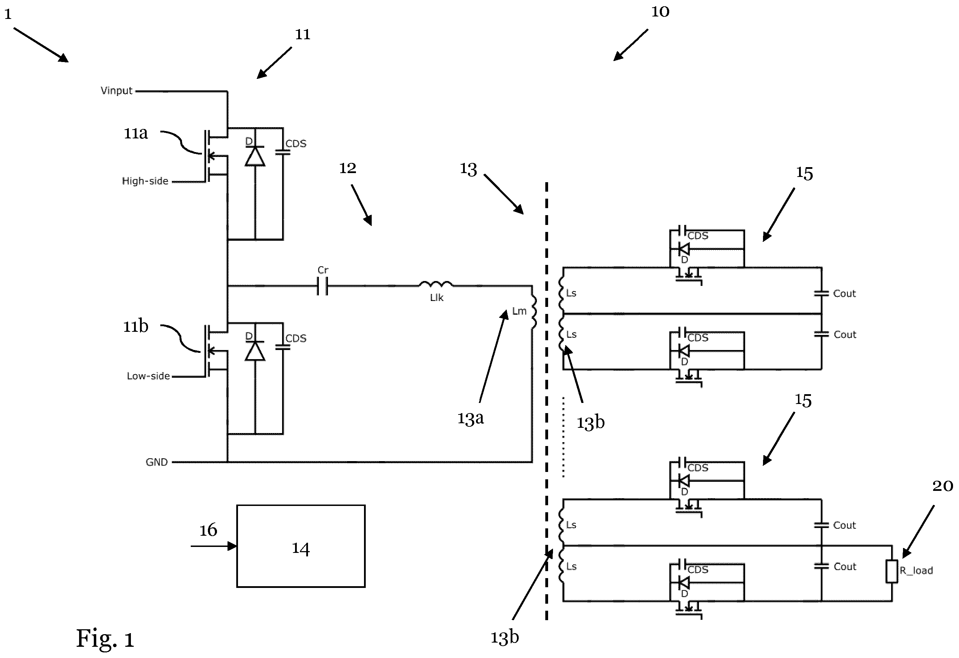

With respect to Fig. 1, an exemplary embodiment of an electrical power converter 10 is illustrated. This converter is based on a half-bridge LLC resonant topology and is configured to efficiently deliver high output current at low output voltage, particularly for applications such as GPU power delivery in data centers or AI accelerator platforms. The electrical power converter 10 comprises an LLC stage including a primary-side switching circuit 11, a resonant tank circuit 12, and a transformer 13.

The primary-side switching circuit 11 includes a high-side switch 11a and a low-side switch 11b connected in series between a supply voltage (Vinput) and ground.

The resonant tank circuit 12 is coupled between the midpoint of the switching circuit 11 and a primary winding 13a of the transformer 13. The resonant tank circuit 12 may include one or more inductive and capacitive components arranged to establish resonant conditions during operation, for instance, a resonant capacitor Cr, a resonant inductor Llk and a magnetization inductor Lm. The resonant tank is designed to define a resonant frequency at which the converter operates with soft-switching behavior (typically near zero-voltage switching, ZVS).

The transformer 13 provides galvanic isolation and has one or more secondary windings 13b for power delivery to the output stage. One or more secondary-side rectification circuits are typically coupled to the secondary windings to convert the AC waveform into a DC output.

The power converter 10 further includes a control circuitry 14, which is configured to operate the high-side and low-side switches 11a, 11b at a fixed switching frequency. The control circuitry 14 also regulates the deadtime-that is, the interval between turning off one switch and turning on the other. This deadtime is modulated in accordance with the power demand of the load, i.e., to maintain a constant output voltage (e.g., 1.8 V), which allows the converter to adjust the amount of energy transferred during each switching cycle without changing the operating frequency. For instance, by increasing the deadtime at lower loads, the converter reduces its power output while remaining in a resonant operating mode.

Notably, the deadtime may be constrained within a predefined range that ensure that the converter remains within resonant-mode operation, thereby preserving the conditions required for soft switching. This prevents hard switching scenarios that would otherwise increase losses and device stress, ensuring high efficiency and component longevity.

The control circuitry 14 may receive a feedback signal 16 indicative of the output voltage. This signal may be obtained from various sources, including:
- A current sensor on the output of the LLC stage,
- A signal from a downstream converter stage (not shown in Fig. 1), or
- A direct signal from the load (e.g., a GPU or system controller).

Although the downstream converter stage is not shown in Figure 1, it is typically connected to the output of the LLC stage (i.e., after the secondary-side rectification circuit). In some implementations, the downstream stage may comprise a buck converter configured to regulate the output voltage to a very low level, for example below 2 V, suitable for modern processors or AI accelerators. The downstream stage may also serve as a source of dynamic feedback to the control circuit, enabling rapid adjustments to the deadtime based on transient load conditions.

Additionally, while Fig. 1 does not show the electrical connections between the control circuitry 14 and the switching components, these are understood to include gate drivers or control logic interfaces that allow real-time modulation of switch timing. Similarly, connections to sensing elements or digital communication links (e.g., from a digital controller or telemetry interface) may also be implemented.

The control circuitry 14 may be implemented using analog or digital control logic, microcontrollers, gate driver ICs, or a combination thereof. The specific arrangement and signal pathways are omitted for clarity and may vary depending on implementation, but would be understood by a person skilled in the art. The invention is not limited to any particular control circuit layout.

Optionally, the output of the LLC stage may include low-ESR capacitors, such as ceramic or polymer capacitors, which are more suitable than electrolytic capacitors in high-speed, high-current applications.

Instead of large electrolytic buffers, this invention enables the use of compact, low-ESR output capacitors-such as ceramic or polymer types. This is made possible by the improved transient response achieved through deadtime regulation at fixed switching frequency. By dynamically modulating the energy transferred per cycle, the converter can respond more effectively to sharp changes in load demand, minimizing voltage droop and reducing the need for oversized output capacitance. This contributes to a more compact, efficient, and reliable power delivery system-particularly beneficial in space- and performance-critical applications like GPU and AI accelerator power supplies.

In some embodiments, the transformer 13 may be implemented as a matrix transformer, comprising multiple secondary windings arranged in parallel to evenly distribute the output current and reduce thermal and conduction losses.

In one embodiment, the transformer 13 may preferably be implemented as a matrix transformer. The transformer 13 may comprise a plurality of secondary windings 13b connected in parallel. These secondary windings 13b are configured to supply a rectified output voltage Vout at high current and low voltage. For instance, each secondary winding 13b may be connected to an individual secondary-side rectifier circuit 15, which provides a regulated output voltage at high current and low voltage.

For instance, in GPU power systems, "low DC voltage and high current" may mean supply voltages in about 1-2 V range, with currents from 50 A up to 600 A+, depending on load and system design.

The transformer 13 may comprise at least one primary winding 13a. The primary winding 13a of the transformer 13 could be formed by a single winding or multiple winding elements, which are connected in series. The at least one primary winding 13a can be magnetically coupled to the plurality of secondary windings 13b, i.e., to each of the plurality of secondary windings.

In preferred embodiments, the transformer 13 is designed with a winding ratio between the primary and secondary windings that is substantially one-to-one, thereby enabling efficient high-current transfer. However, also other winding ratios between primary and secondary windings are possible.

In one embodiment, each secondary-side rectification circuit 15 includes synchronous rectifiers (e.g., MOSFETs with body diodes and capacitance), and filtering capacitors (C_out). These circuits are connected to form one or more regulated DC outputs. In the illustrated embodiment, multiple rectifiers are shown operating in parallel to supply a high-current, low-voltage load 20, represented by R_load.

Fig. 1 is a simplified schematic intended to represent the principal components and functional blocks of the LLC stage of the proposed power converter 10. Additional circuitry for protection, filtering, or monitoring may be included in practical implementations without departing from the scope of the invention.

The electrical power converter 10 can be used for power delivery to a CPU, a GPU, or another component with a high power demand, e.g., in a datacenter environment.

It may be understood that Fig. 1 also shows a power delivery system 1 comprising a load device 20 configured to operate at a low DC voltage and high current, and the electrical power converter 10. Possibly, the low DC voltage is below 5 V, preferably below 2 V, and the high current is more than 100 A, preferably more than 500 A, more preferably more than 1000 A.

In various embodiments, the load device 10 may include, but is not limited to, a GPU in a server or data center, an industrial computing module, or a lighting system such as an LED array, luminaire, or ballast.

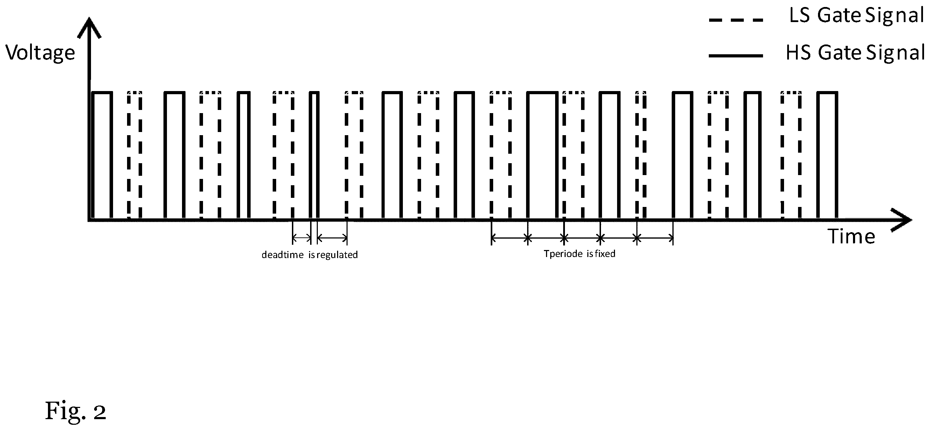

Fig. 2 illustrates an exemplary timing diagram showing the gate control signals applied to the high-side (HS) and low-side (LS) switches in an LLC resonant converter operating at a fixed switching frequency, while the deadtime between the switching transitions is dynamically regulated. In one embodiment, the LLC resonant converter is the converter 10 described in Fig. 1.

The horizontal axis represents time, and the vertical axis represents voltage (for gate signals). The solid waveform corresponds to the gate signal for the high-side switch, while the dashed waveform corresponds to the gate signal for the low-side switch.

As shown, each switching cycle maintains a constant period (Tperiod), ensuring the converter operates at a fixed frequency. However, the deadtime-the interval between the turn-off of one switch and the turn-on of the other-is varied across cycles. This deadtime modulation allows the converter to control the effective duty cycle of power delivery to the resonant tank, thereby modulating the energy transferred to the load per switching cycle without departing from the resonant frequency.

This control strategy enables efficient power scaling, especially under light-load conditions, without compromising soft-switching behavior. By increasing the deadtime, the converter reduces energy throughput, while decreasing deadtime increases power transfer-allowing seamless and efficient operation over a wide load range.

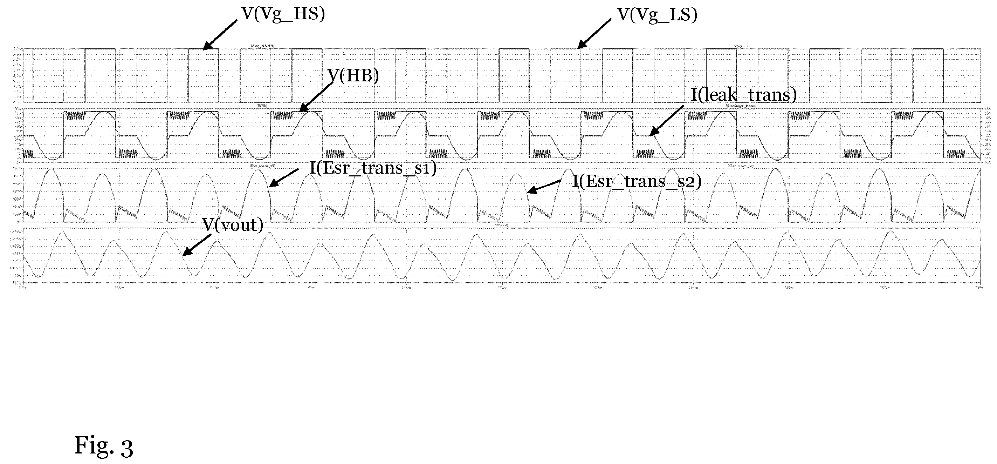

Fig. 3 presents a simulated waveform plot of various electrical quantities in the LLC converter described in Fig. 1, under an example operating condition in which deadtime is actively regulated at fixed switching frequency.

Key waveforms shown include:
Gate signals (V(g_HS) and V(g_LS)): These show the switching control signals applied to the high-side and low-side switches 11a, 11b. They confirm fixed-frequency operation, with alternating switching and a variable deadtime clearly observable between transitions.

Half-bridge midpoint voltage (VHB) and transformer leakage current (I(leak_trans)): The VHB waveform exhibits the typical trapezoidal/oscillatory behavior expected in resonant converters. The leakage current shows the resonant response of the circuit and correlates with the energy delivered per switching cycle.

Transformer secondary current (I(ESR_trans_s1), I(ESR_trans_s2)): These represent the current through the equivalent series resistances of the secondary-side transformer windings. The peak amplitude of these currents reflects the power being delivered to the load and varies in accordance with the deadtime.

Output voltage (V(out)): This shows the voltage across the output filter capacitor (not explicitly shown in Fig. 1). The waveform remains stable and well-regulated despite variations in load and switching conditions, confirming effective voltage regulation.

This figure demonstrates how regulating the deadtime at fixed switching frequency allows the LLC converter to dynamically respond to varying load demands. As the load current changes, the deadtime is adjusted to maintain soft-switching (e.g., zero-voltage switching, ZVS) and to avoid over- or under-delivery of energy. This control technique enables fast transient response, reduced need for large output capacitors, and high efficiency across a wide load range.

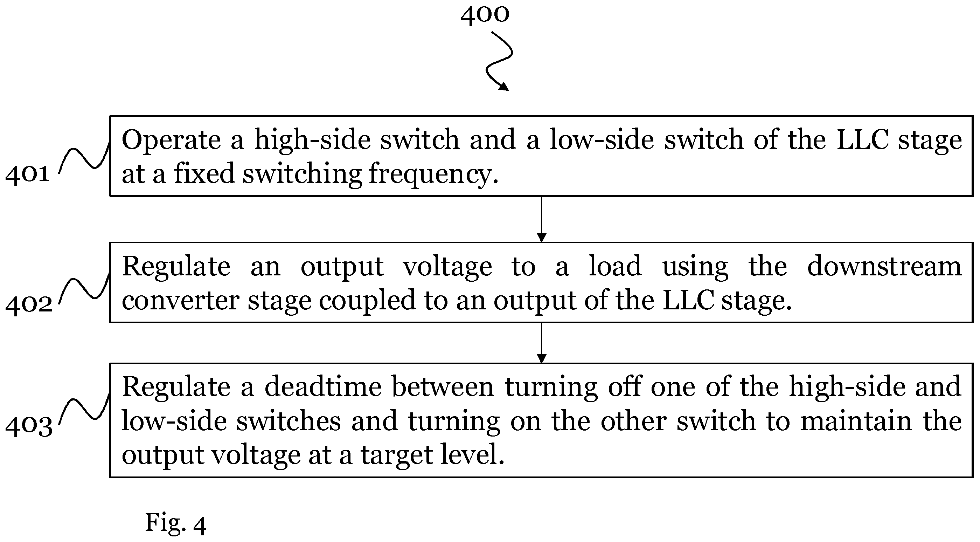

Fig. 4 illustrates a flowchart representing an embodiment of the method 400 for operating the electrical power converter 10 comprising an LLC stage and a downstream converter stage according to the invention. The electrical power converter 10 may be the electrical power converter described in the previous embodiments, as shown in Fig. 1, and operated in accordance with the control strategies illustrated in Fig. 2 and Fig. 3.

This method enables adaptive control of the LLC converter's output voltage in response to changing load conditions. It is specifically designed to maintain the converter's operation at or near the resonant frequency of the resonant tank circuit across a wide range of output loads, thereby improving efficiency and soft-switching conditions.

At step 401, the method begins by operating the high-side and low-side switches of the LLC stage at a fixed switching frequency. This ensures that the converter 10 operates close to the resonant frequency of the resonant tank circuit, enabling soft-switching conditions and maximizing efficiency.

At step 402, an output voltage is regulated using the downstream converter stage. This stage receives power from the output of the LLC stage and is configured to deliver a tightly controlled low-voltage output to a dynamic load, such as a GPU or AI accelerator. The downstream stage may operate independently or in coordination with the LLC controller, depending on system architecture.

At step 403, the method includes regulating the deadtime between turning off one of the high-side or low-side switches and turning on the other switch. This deadtime is regulated to maintain the output voltage at a target level. For example, when a condition in which the output voltage tends to rise above the target level is detected, the deadtime may be increased to reduce power transfer per cycle. Conversely, a shorter deadtime may be applied when the output voltage tends to drop.

Optionally, the method may further comprise receiving a feedback signal 16 indicative of the output voltage, and regulating the deadtime based on the feedback signal 16.

In particular, the feedback signal 16 may be derived from one of the following: a current sensor coupled to the output of the LLC stage, the downstream converter stage, or the load 20.

In one embodiment, the method may further comprise constraining the deadtime within a predefined range suitable for maintaining soft-switching conditions in the LLC stage.

The deadtime adjustment allows the converter to modulate output power without changing the switching frequency. This simplifies control, maintains resonance, and supports soft switching (e.g., ZVS), while also improving transient response. Additionally, this approach reduces dependence on large output capacitors, enabling smaller and more efficient designs suitable for compact and high-performance systems.

The foregoing description has presented exemplary embodiments of an electrical power converter and its method of operation, particularly suited for high-current, low-voltage applications such as GPU power delivery in data centers, where typical output voltages range from 1 V to 2 V with substantial current demands. Central to the invention is the implementation of fixed-frequency operation of the LLC stage combined with regulated deadtime control. By modulating the deadtime between switching transitions to maintain the output voltage at a target level, the converter dynamically adjusts energy transfer per switching cycle without deviating from the resonant frequency. This ensures soft-switching behavior (e.g., ZVS) is preserved across a wide operating range, improving efficiency and reducing switching losses.

Additionally, the invention supports integration with a downstream converter stage, such as a buck converter, for precise low-voltage regulation. The improved responsiveness achieved through deadtime control may also reduce the reliance on large output capacitors, enabling more compact and cost-effective designs. The use of low-ESR ceramic or polymer capacitors is facilitated by the converter's enhanced transient handling capability.

Although the invention has been described with reference to specific components such as an LLC resonant topology, matrix transformer configurations, and particular timing control schemes, it will be understood by those skilled in the art that various modifications and alternative implementations may be made without departing from the scope of the invention. Thus, the breadth and scope of the present invention should not be limited by any of the above-described embodiments. Rather, the scope of the invention should be defined in accordance with the following claims and their legal equivalents.

For example, the control strategy may be implemented through different sensing or measurement methods. The system may be adapted to a wide variety of power delivery environments, including industrial control, telecommunications, and advanced computing platforms. The transformer configuration, winding ratios, and rectification topologies may also be varied to meet different system requirements.

In addition, while a particular feature of the invention may have been disclosed with respect to only one of several implementations, such feature may be combined with one or more other features of the other implementations as may be desired and advantageous for any given or particular application.

## Claims

1. An electrical power converter (10) comprising:
an LLC stage comprising:
- a primary-side switching circuit (11) including a high-side switch (11a) and a low-side switch (11b) connected in series between a supply voltage and ground,
- a resonant tank circuit (12) coupled to the primary-side switching circuit (11), and
- a transformer (13) having a primary winding (13a) coupled to the resonant tank circuit (12) and one or more secondary windings (13b),
a downstream converter stage coupled to an output of the LLC stage and configured to regulate an output voltage for a load (20); and
a control circuitry (14) configured to:
- operate the high-side and low-side switches of the LLC stage at a fixed switching frequency,
- regulate a deadtime between turning off one of the high-side and low-side switches (11a, 11b) and turning on the other switch to maintain the output voltage at a target level.

2. The electrical power converter (10) according to claim 1, wherein the control circuitry (14) is further configured to:
receive a feedback signal (16) indicative of the output voltage, and
regulate the deadtime based on the feedback signal (16).

3. The electrical power converter (10) according to claim 2, wherein the feedback signal (16) is derived from one of the following: a current sensor coupled to the output of the LLC stage, the downstream converter stage, or the load (20).

4. The electrical power converter (10) according to any one of the preceding claims, wherein the control circuitry (14) is further configured to:
increase the deadtime in response to conditions indicative of the output voltage tending to rise above the target level.

5. The electrical power converter (10) according to any one of the preceding claims, wherein the deadtime is constrained within a predefined range suitable for maintaining soft-switching conditions in the LLC stage.

6. The electrical power converter (10) according to any one of the preceding claims, wherein the downstream converter stage comprises a buck converter configured to regulate the output voltage to a defined low-voltage level.

7. The electrical power converter (10) according to any one of the preceding claims, wherein the transformer (13) is a matrix transformer comprising a plurality of secondary windings (13b) connected in parallel.

8. The electrical power converter (10) according to any one of the preceding claims, further comprising one or more output capacitors having low equivalent series resistance, including ceramic or polymer capacitors, coupled to the output of the LLC stage.

9. A method (400) for operating an electrical power converter (10) comprising an LLC stage and a downstream converter stage, the method (400) comprising:
operating (401) a high-side switch (11a) and a low-side switch (11b) of the LLC stage at a fixed switching frequency,
regulating (402) an output voltage to a load (20) using the downstream converter stage coupled to an output of the LLC stage, and
regulating (403) a deadtime between turning off one of the high-side and low-side switches (11a, 11b) and turning on the other switch to maintain the output voltage at a target level.

10. The method (400) according to claim 9, further comprising:
receiving a feedback signal (16) indicative of the output voltage, and
regulating the deadtime based on the feedback signal (16).

11. The method (400) according to claim 9 or 10, further comprising:
deriving the feedback signal (16) from one of the following: a current sensor coupled to the output of the LLC stage, the downstream converter stage, or the load (20).

12. The method (400) according to any of claims 9 to 11, further comprising:
increasing the deadtime in response to conditions indicative of the output voltage tending to rise above the target level.

13. The method (400) according to any of claims 9 to 12, further comprising:
constraining the deadtime within a predefined range suitable for maintaining soft-switching conditions in the LLC stage.

14. A power delivery system (1) comprising:
a load device (20) configured to operate at a low DC voltage and high current; and
an electrical power converter (10) according to any one of claims 1 to 8, wherein the electrical power converter (10) is configured to supply power to the load device (20).

15. The power delivery system (1) according to claim 14, wherein the load device (20) comprises a graphics processing unit, a lighting module, or an array of LEDs.
